# EUROPEAN PATENT APPLICATION

(11) **EP 4 760 230 A1**
(43) Date of publication of application: **17.06.2026**
(21) Application number: 24851647.8
(22) Date of filing: 26.07.2024
(51) Int. Cl.: G01N 1/10

(54) **FILTRATION DEVICE, FILTRATION SYSTEM, AND FILTRATION METHOD**

(30) Priority: 08.08.2023 JP 2023129227
(71) Applicant: HITACHI HIGH-TECH CORPORATION, Tokyo 105-6409 (JP)
(72) Inventor: MATSUMOTO, Erino, Tokyo 100-8280 (JP); HISADA, Akiko, Tokyo 100-8280 (JP); YANAGAWA, Yoshimitsu, Tokyo 100-8280 (JP)
(74) Representative: MERH-IP Matias Erny Reichl Hoffmann Patentanwälte PartG mbB
(86) International application number: PCT/JP2024/026864
(87) International publication number: WO 2025/033222

(57) **Abstract**

To achieve efficient filtration, a first liquid holding portion (101) is provided for holding a liquid. A first hole (411) is disposed at a bottom surface of the first liquid holding portion (101), and a second hole (421) is disposed at a surface of the first liquid holding portion (101), the surface being separate from the bottom surface. A second liquid holding portion (201) is in communication with the first liquid holding portion (101) through the first hole (411), and a third liquid holding portion (301) is in communication with the first liquid holding portion (101) through the second hole (421). A first filter (412) is disposed at the first hole (411), and a second filter (422) is disposed at the second hole (421).

## Description

### TECHNICAL FIELD

The present invention relates to a technology for a filtration device, a filtration system, and a filtration method.

### BACKGROUND ART

With the development of nano- and micro-technology, there are now industries that use particles measuring about several tens of nanometers to several hundred micrometers. For example, fine particles are utilized in automotive paints, cosmetics, and the like. Microscopic observation is used to evaluate and inspect such fine particles in solutions. Furthermore, electron microscopes with sufficient resolution are frequently used for detailed evaluation of the particles. Also, microscopic evaluation has become important in inspection of foreign particles mixed into manufactured materials. In the field of precision equipment, when evaluating the cleanliness of a component, it has become crucial to detect trace amounts of foreign fine particles contained in a washing liquid.

A technique described in Patent Document 1 has been disclosed for microscopic observation of fine particles suspended at a low concentration in a large volume of liquid. Patent Literature 1 discloses a fine particle capturing device and a fine particle measurement method as follows: "A fine particle capturing device for capturing fine particles contained in a liquid has filtration means 10 including a filtration membrane 11. The filtration means 10 is configured such that the liquid flowing into the filtration means 10 passes through part of the filtration membrane 11."

### CITATION LIST

### Patent Literature

Patent Literature 1: JP2017-138226A

### SUMMARY OF INVENTION

### Technical Problem

In the method described in Patent Literature 1, the liquid containing fine particles may be passed through part of the filtration membrane so that the fine particles on the filtration membrane can be efficiently observed. With the technique described in Patent Literature 1, it is necessary to pass a large volume of liquid when fine particles at a low density are collected so as to reach a density suitable for microscopic observation. There is a problem that it takes a long time to filter a large volume of liquid if the area of the filtration membrane through which the liquid passes is small.

The present invention has been made in view of such circumstances, and an object of the present invention is to achieve efficient filtration.

### Solution to Problem

To achieve the above-described object, according to the present invention, a first liquid holding portion is provided for holding a liquid. A first hole is disposed at a bottom surface of the first liquid holding portion, and a second hole is disposed at a surface of the first liquid holding portion, the surface being separate from the bottom surface. A second liquid holding portion is in communication with the first liquid holding portion through the first hole, and a third liquid holding portion is in communication with the first liquid holding portion through the second hole. A first filter is disposed at the first hole, and a second filter is disposed at the second hole.

Other solutions will be described in embodiments as appropriate.

### Advantageous Effects of Invention

According to the present invention, efficient filtration can be implemented.

### BRIEF DESCRIPTION OF DRAWINGS

[FIG. 1] FIG. 1 is a schematic view (part 1) showing an example of a configuration of a filtration device according to a first embodiment.
[FIG. 2] FIG. 2 is a schematic view (part 2) showing an example of the configuration of the filtration device according to the first embodiment.
[FIG. 3] FIG. 3 is a view showing an example of a configuration of a filtration system.
[FIG. 4] FIG. 4 is a view showing how the filtration device is disassembled.
[FIG. 5] FIG. 5 is a view (part 1) showing a configuration of a first filter.
[FIG. 6] FIG. 6 is a view (part 2) showing a configuration of the first filter.
[FIG. 7] FIG. 7 is a view (part 1) showing an overview of filtration of a fine particle suspension using the filtration device.
[FIG. 8] FIG. 8 is a view (part 2) showing the overview of the filtration of the fine particle suspension using the filtration device.
[FIG. 9] FIG. 9 is a view (part 3) showing the overview of the filtration of the fine particle suspension using the filtration device.
[FIG. 10] FIG. 10 is a table showing numerical values related to the area of a first hole.
[FIG. 11] FIG. 11 is a schematic view (part 1) showing an example of a configuration of a filtration device according to a second embodiment.
[FIG. 12] FIG. 12 is a schematic view (part 2) showing the example of the configuration of the filtration device according to the second embodiment.
[FIG. 13] FIG. 13 is a schematic view (part 3) showing the example of the configuration of the filtration device according to the second embodiment.
[FIG. 14] FIG. 14 is a schematic view (part 4) showing the example of the configuration of the filtration device according to the second embodiment.
[FIG. 15] FIG. 15 is a schematic view (part 1) showing an example of a configuration of a filtration device according to a third embodiment.
[FIG. 16] FIG. 16 is a schematic view (part 2) showing the example of the configuration of the filtration device according to the third embodiment.
[FIG. 17] FIG. 17 is a schematic view (part 3) showing the example of the configuration of the filtration device according to the third embodiment.
[FIG. 18] FIG. 18 is a schematic view (part 4) showing an example of the configuration of the filtration device according to the third embodiment.
[FIG. 19] FIG. 19 is a schematic view (part 1) showing an example of a configuration of a filtration device according to a fourth embodiment.
[FIG. 20] FIG. 20 is a schematic view (part 2) showing the example of the configuration of the filtration device according to the fourth embodiment.
[FIG. 21] FIG. 21 is a schematic view (part 3) showing the example of the configuration of the filtration device according to the fourth embodiment.
[FIG. 22] FIG. 22 is a view showing a modification of the arrangement of first liquid holding portions.
[FIG. 23] FIG. 23 is a view (part 1) showing a filtration device according to a fifth embodiment.
[FIG. 24] FIG. 24 is a view (part 2) showing a filtration device according to the fifth embodiment.
[FIG. 25] FIG. 25 is a view showing an example of a configuration of a filtration device according to a sixth embodiment.
[FIG. 26] FIG. 26 is a flowchart showing a procedure of a filtration method according to the present embodiment.
[FIG. 27] FIG. 27 is a schematic view (part 1) for describing the procedure of the filtration method according to the present embodiment.
[FIG. 28] FIG. 28 is a schematic view (part 2) for describing the procedure of the filtration method according to the present embodiment.
[FIG. 29] FIG. 29 is a schematic view (part 3) for describing the procedure of the filtration method according to the present embodiment.
[FIG. 30] FIG. 30 is a schematic view (part 4) for describing the procedure of the filtration method according to the present embodiment.
[FIG. 31] FIG. 31 is a schematic view (part 5) for describing the procedure of the filtration method according to the present embodiment.
[FIG. 32] FIG. 32 is a schematic view (part 6) for describing the procedure of the filtration method according to the present embodiment.
[FIG. 33] FIG. 33 is a schematic view (part 7) for describing the procedure of the filtration method according to the present embodiment.
[FIG. 34] FIG. 34 is a schematic view (part 8) for describing the procedure of the filtration method according to the present embodiment.
[FIG. 35] FIG. 35 is a schematic view (part 9) for describing the procedure of the filtration method according to the present embodiment.
[FIG. 36] FIG. 36 is a schematic view (part 10) for describing the procedure of the filtration method according to the present embodiment.
[FIG. 37] FIG. 37 is a schematic view showing another example of the filtration device according to the second embodiment.
[FIG. 38] FIG. 38 is a view showing a configuration of a first filter as another example used in the filtration device according to the second embodiment.
[FIG. 39] FIG. 39 is a schematic view showing another example of the filtration device according to the third embodiment.

### DESCRIPTION OF EMBODIMENTS

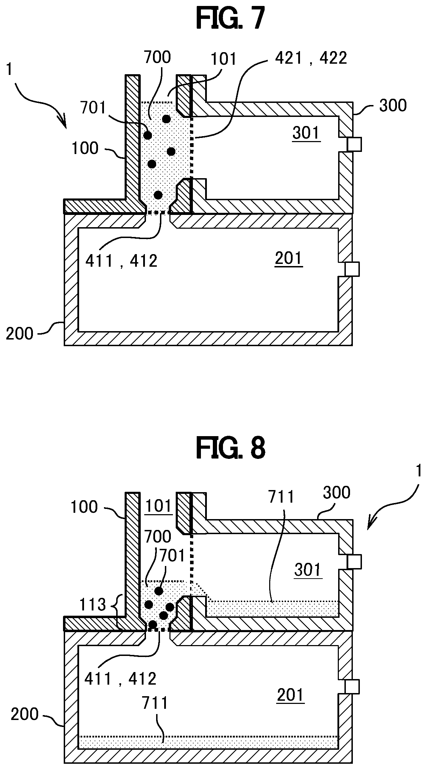

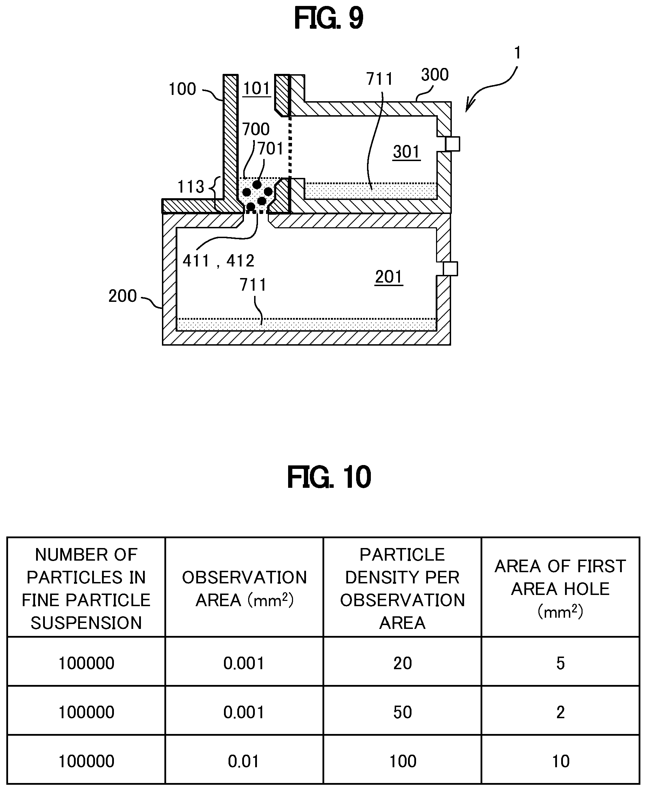

Embodiments of the present invention will be described below with reference to the drawings. Note that "fine particles 701 (see FIGS. 7 and 9)" in the following refer to, but are not limited to, particles formed by pulverization, sintering, crystallization, or the like, particles precipitated or generated by chemical reactions, particles generated by external stimuli or external factors, fibers of organic substances, microplastics, pollen, cells, blood cells, bacteria, viruses, and so on.

Also, similar components in figures are denoted by the same reference sign, and repetitive description thereof will be omitted.

### [First Embodiment]

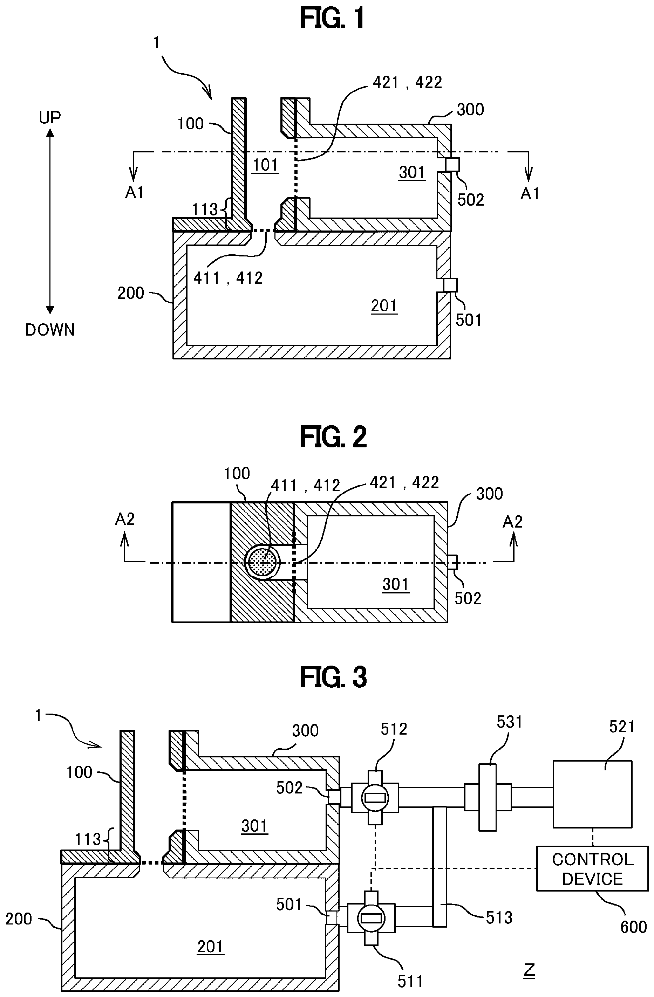

FIGs. 1 and 2 are schematic views showing an example of a configuration of a filtration device 1 according to a first embodiment.

FIG. 1 shows a cross-sectional view as seen along the arrows A2-A2 in FIG. 2, and FIG. 2 shows a cross-sectional view as seen along the arrows A1-A1 in FIG. 1.

As shown in FIG. 1, the filtration device 1 includes a first member 100, a second member 200, and a third member 300. The first member 100, which is a first container, has a first liquid holding portion 101 therein which is a tubular space and holds a liquid. That is, the first liquid holding portion 101 is provided in the first member 100. A solution containing fine particles 701(see FIGs. 7 and 9) (referred to as the fine particle suspension 700 (see FIGs. 7 and 9) is introduced and held in the first liquid holding portion 101. Note that, in the example shown in FIGs. 1 and 2, the shape of a cross section of the first liquid holding portion 101 cut in a direction orthogonal to the axial direction of the first liquid holding portion 101 (horizontal cross-sectional shape) is substantially circular. However, the horizontal cross-sectional shape of the first liquid holding portion 101 is not limited to a circular shape and may be a polygonal shape. Also, a first hole 411 is provided at the bottom surface of the first liquid holding portion 101, and a second hole 421 is provided at a surface of the first liquid holding portion 101 other than the bottom surface (side surface).

Moreover, the second member 200 and the third member 300 are second containers which are containers different from the first member 100.

Also, the second member 200 includes a hollow second liquid holding portion 201 therein. The second liquid holding portion 201 is capable of retaining a liquid therein. The liquid retained in the second liquid holding portion 201 is a liquid that has been passed (filtered) through a first filter 412. Also, a hole is provided at the upper surface of the second member 200. This hole forms the first hole 411 together with the hole provided at the bottom surface of the first liquid holding portion 101. That is, the second liquid holding portion 201 communicates with the first liquid holding portion 101 through the first hole 411. It is desirable that the size of the hole provided at the bottom surface of the first liquid holding portion 101 and that of the hole provided at the upper surface of the second member 200 be substantially equal but may be different (the sizes of the holes are substantially equal in the present embodiment).

As described above, the second liquid holding portion 201 is provided in the second member 200, which is a container different from the first member 100.

The third member 300 includes a third liquid holding portion 301 therein which is a hollow space. The third liquid holding portion 301 is capable of retaining a liquid therein. The liquid retained in the third liquid holding portion 301 is a liquid that has been passed (filtered) through a second filter 422. Also, a hole is provided at a side surface of the third member 300. This hole forms the second hole 421 together with the hole provided at the side surface of the first liquid holding portion 101. That is, the third liquid holding portion 301 communicates with the first liquid holding portion 101 through the second hole 421. Incidentally, it is desirable that the size of the hole provided at the side surface of the first liquid holding portion 101 and that of the hole provided at the side surface of the third member 300 be substantially equal but may be different (the sizes of the holes are substantially equal in the present embodiment).

Note that, in the present embodiment, capacity of second liquid holding portion 201 > capacity of third liquid holding portion 301 > capacity of first liquid holding portion 101. However, the capacity of the first liquid holding portion 101 only needs to be such that it can hold the liquid yet to be filtered. Likewise, the capacity of the second liquid holding portion 201 only needs to be such a capacity that it can hold the liquid that has been passed (filtered) through the first filter 412. Moreover, the capacity of the third liquid holding portion 301 only needs to be such a capacity that it can hold the liquid that has been passed (filtered) through the second filter 422.

Also, one of the surfaces forming the second liquid holding portion 201 includes a first gas discharge port 501. The first gas discharge port 501 is provided on an upper side of the second liquid holding portion 201 in order to prevent the liquid retained in the second liquid holding portion 201 from flowing into the first gas discharge port 501.

Also, one of the surfaces forming the third liquid holding portion 301 includes a second gas discharge port 502. It is desirable that the second gas discharge port 502 be provided on an upper side of the third liquid holding portion 301 in order to prevent the liquid retained in the third liquid holding portion 301 from flowing into the second gas discharge port 502.

Moreover, the first filter 412 is provided at the first hole 411, and the second filter 422 is provided at the second hole 421.

As described above, the filtration device 1 is provided with the first hole 411 at the bottom surface of the first liquid holding portion 101. Moreover, the first filter 412 for concentrating the fine particle suspension 700 and capturing the fine particles 701 (see FIGs. 7 and 9) is provided at the first hole 411. Also, the filtration device 1 is provided with the second hole 421 at a surface of the first liquid holding portion 101 other than the bottom surface. The second filter 422 for filtering the fine particle suspension 700 is provided at the second hole 421. Also, as described earlier, the second member 200 includes the second liquid holding portion 201. Likewise, the third member 300 includes the third liquid holding portion 301. The second liquid holding portion 201 and the third liquid holding portion 301 are substantially airtight.

The capacity of the first liquid holding portion 101 is dependent on the concentration of the fine particle suspension 700 to be filtered and conditions for processes of staining the fine particles 701 and washing the fine particles 701. Specifically, the first liquid holding portion 101 has a capacity of approximately 10 to 2000 ml.

The first filter 412 and the second filter 422 are sheets having many fine pores, and have a thickness of several micrometers to several tens of micrometers. The pore diameter of the first filter 412 and the second filter 422 is about 10 nm to 10 µm. However, the pore diameter is not limited to this, and may be any pore diameter that is smaller than the fine particles 701 suspended in the fine particle suspension 700 to be filtered and is capable of collecting the fine particles 701 as a residue. It is preferable to use the same pore diameter for the many fine pores in the first filter 412 and the second filter 422. However, the pore diameter of the first filter 412 and that of the second filter 422 do not necessarily need to be the same.

It is desirable that the area of the second hole 421 be larger than the area of the first hole 411. In the present embodiment, area of second hole 421 > area of first hole 411. The first filter 412 has a size that can be placed on a microscope. For this reason, the first hole 411 (first filter 412) cannot be made larger than a size that can be placed on a microscope. Thus, by making the area of the second hole 421 (second filter 422) larger than that of the first hole 411 (first filter 412), it is possible to increase the filtration rate. Employing such a configuration can shorten the filtration time as compared to a case where only the first hole 411 (first filter 412) is provided.

Note that the second hole 421 does not necessarily need to be larger than the first hole 411. Also, the second liquid holding portion 201 and the third liquid holding portion 301 have capacities that can store a discharged liquid 711 (see FIG. 9) which is a liquid resulting from a single filtration process. Also, for the first member 100, the second member 200, and the third member 300, a material that is resistant to the solution used in the fine particle suspension 700 is used. Examples of such a material include polypropylene (PP), polycarbonate (PC), polyethylene (PE), polyethersulfone (PES), polyethylene terephthalate (PET), fluororesins such as polytetrafluoroethylene, nylon, polyether ether ketone (PEEK), and so on. Using these resin materials offers the advantage of reducing the cost and weight.

Also, as shown in FIG. 1, the bottom surface (bottom portion) of the first liquid holding portion 101 and the lower end of the second hole 421 are formed have a predetermined distance. As a result, a measurement portion 113 capable of storing a predetermined amount of the fine particle suspension 700 is formed below the second hole 421. Note that the measurement portion 113 does not necessarily need to be provided. If the measurement portion 113 is not provided, the distance from the lower end of the second hole 421 to the first filter 412 is substantially zero.

The predetermined distance is the distance between the bottom surface of the first liquid holding portion 101 (i.e., the upper surface of the first filter 412) and the lower end of the second hole 421 in the height direction, and this predetermined distance is set as appropriate based on the specifications of the filtration device 1 and the like. The shorter this predetermined distance, the smaller the capacity of the measurement portion 113, and the longer the distance, the larger the capacity.

Note that the outer shape of the first member 100 at the first liquid holding portion 101 is not limited to a quadrangle shape as shown in FIG. 1 and may be a circular shape.

### (Filtration System Z)

FIG. 3 is a view showing an example of a configuration of a filtration system Z. FIG. 3 shows a cross-sectional view of the filtration device 1 as seen along the arrows A2-A2 in FIG. 2. When the filtration system Z is used, a gas discharge pump 521 is connected to the first gas discharge port 501 and the second gas discharge port 502 of the filtration device 1. The gas discharge pump 521 generates a pressure difference to be used to filter the liquid. Also, the first gas discharge port 501 and the second gas discharge port 502 are connected to the gas discharge pump 521 through a pipe 513. The pipe 513 is provided with a first gas discharge valve 511, a second gas discharge valve 512, and a pipe filter 531. The pipe filter 531 prevents fine particles from flowing into the gas discharge pump 521 from the filtration device 1.

Thus, the second liquid holding portion 201 and the third liquid holding portion 301 are connected to the gas discharge pump 521.

The first gas discharge valve 511 is provided at the first gas discharge port 501 and is capable of switching the second liquid holding portion 201 between a gas discharge state and an atmospherically open state. Also, the second gas discharge valve 512 is provided at the second gas discharge port 502 and, like the first gas discharge valve 511, is capable of switching the third liquid holding portion 301 between a gas discharge state and an atmospherically open state. Thus, the first gas discharge valve 511 and the second gas discharge valve 512 are capable of switching between the gas discharge pump 521 side and an atmospherically open side.

As the gas discharge pump 521, a pump capable of operating under low vacuum, such as a diaphragm vacuum pump or a dry pump, can be used. The pipe filter 531 is used to prevent fine particles from being sucked into the gas discharge pump 521, as described earlier, to prevent malfunctioning of the gas discharge pump 521 and release of the fine particles from the gas discharge port of the gas discharge pump 521. As the pipe filter 531, an air filter, such as a HEPA filter, is used, for example. In addition to the pipe filter 531, a trap pipe not shown or the like may be used as appropriate to prevent fine particles from being sucked into the gas discharge pump 521. Note that one pipe filter 531 is provided in the example shown in FIG. 3, but two pipe filters 531 may be provided in such a way as to correspond to the first gas discharge valve 511 and the second gas discharge valve 512.

As the first gas discharge valve 511 and the second gas discharge valve 512, a manual type and an electrically powered type are both usable. In the case of using the electrically powered first gas discharge valve 511 and second gas discharge valve 512, their operation can be simplified by linking it to the operation of the gas discharge pump 521 by means of a control device 600. As the pipe 513, one made of metal or rubber, for example, is used. As the pipe 513, it is preferable to use one having such hardness as to keep the pipe 313 from collapsing due to the suction during gas discharge and interrupting the gas discharge. When the first gas discharge valve 511 and the second gas discharge valve 512 are of the electrically power type, the first gas discharge valve 511 and the second gas discharge valve 512 can be controlled by the control device 600. Also, the gas discharge pump 521 may be controlled manually or controlled by the control device 600. The discharged liquid 711 (see FIG. 9) collected in the second liquid holding portion 201 and the third liquid holding portion 301 as a result of filtration can be processed as necessary using a purification (sterilization) device not shown.

### (Replacement of First Filter 412)

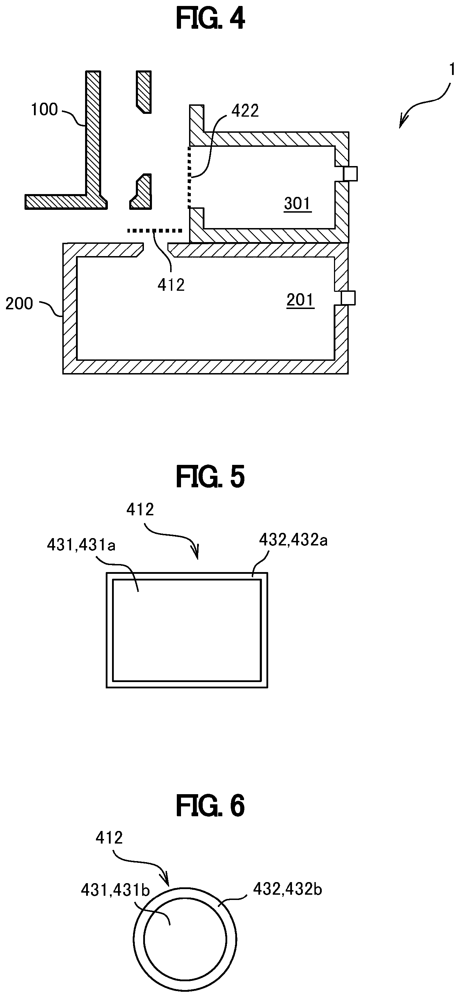

FIG. 4 is a view showing how the filtration device 1 is disassembled. FIG. 4 shows a cross-sectional view of the filtration device 1 as seen along arrows similar to FIG. 1.

As shown in FIG. 4, the first member 100 can be attached to and detached from the second member 200 and the third member 300. By detaching the first member 100 from the second member 200 and the third member 300, the first filter 412 provided at the first hole 411 can be attached and detached. In this way, the user can easily detach the first filter 412. The user can detach the first filter 412 after filtering a fine particle suspension 700 by filtering out the fine particles 701 in the fine particle suspension 700 with the first filter 412 and the second filter 422. Then, by placing the detached first filter 412 on a microscope (not shown), the user can observe the fine particles 701 collected by the first filter 412 with the microscope. Note that the microscope in the present embodiment is an electron microscope, an optical microscope, an atomic force microscope, or the like. The fine particle suspension 700 is filtered through the first filter 412, which have many fine pores, by suction by the gas discharge pump 521. As a result, fine particles 701 are dispersed and captured on the first filter 412. The first filter 412 with fine particles 701 dispersed and captured thereon is a sample for microscopic observation. A sample for microscopic observation can be prepared in this manner. Note that the second filter 422 is not used in the microscope observation.

Also, the second member 200 and the third member 300 may be disassemblable or not disassemblable.

### (Configuration of First Filter 412)

FIGs. 5 and 6 are views showing configurations of the first filter 412.

As shown in FIGs. 5 and 6, the first filter 412 has a filter body 431 and a frame 432 provided along the outer periphery of the filter body 431. The frame 432 has such hardness that it can be gripped. In the example shown in capturing, a frame 432a is provided around a quadrangle filter body 431a. Also, in the example shown in FIG. 6, a frame 432b is provided around a circular filter body 431b. Note that the shapes of the filter body 431 and the frame 432 are not limited to the shapes shown in FIGs. 5 and 6, and may be an elliptical shape or a polygonal shape other than a quadrangle.

As shown in FIGs. 5 and 6, the filter body 431, which is so thin that it alone is difficult to handle, is fixed to the frame 432. This makes it easy for the user to grip the first filter 412. This in turn facilitates attachment and detachment of the first filter 412 to and from the filtration device 1 and mounting of the first filter 412 onto the sample stage of a microscope (not shown). By using an electrically conductive material for the frame 432, it is possible, for example, to alleviate the electrical charging by electron beams during the observation with an electron microscope, for example. Also, the filter body 431 may be directly subjected to a process that imparts electric conductivity, such as coating with gold or platinum. Doing so is effective in alleviating the electrical charging by electron beams.

The filter body 431 is made of, for example, polycarbonate (PC), polyester (PET), polyimide (PI), regenerated cellulose, nitrocellulose, cellulose acetate, mixed cellulose ester, polypropylene, nylon, polyamide, polytetrafluoroethylene (PTFE), polyvinylidene chloride (PVC), polyvinylidene fluoride (PVDF), polyethersulfone (PES), or the like.

A membrane filter suitable for the filter body 431 is selected based on the following perspectives.
(1) Chemical resistance against reagents to be used.
(2) Whether the components contained in the sample adsorb onto the material of the filter.
(3) Whether the pore diameter of the filter body 431 is smaller than the fine particles 701 to be collected.

Also, the material of the filter body 431 of the first filter 412 and that of the filter body of the second filter 422 may be the same or different.

### (Overview of Filtration)

Next, an overview of the filtration of a fine particle suspension 700 (liquid) using the filtration device 1 will be described using FIGs. 7 to 9. Note that a detailed procedure of the filtration of the fine particle suspension 700 will be described later. Also, the description will refer to FIG. 3 as appropriate.

FIGs. 7 to 9 are views showing an overview of the filtration of the fine particle suspension 700 using the filtration device 1. Also, in the figures in the following, only the elements of the filtration device 1 necessary for the description are denoted by their reference signs.

First, as shown in FIG. 7, the fine particle suspension 700 containing fine particles 701 is introduced into the first liquid holding portion 101. The introduced fine particle suspension 700 is substantially blocked from flowing into the second liquid holding portion 201 and the third liquid holding portion 301 by the first filter 412 and the second filter 422.

Though the illustration is omitted in FIGs. 7 to 9, the gas discharge pump 521 is connected to the first gas discharge port 501 and the second gas discharge port 502, as shown in FIG. 3. The first gas discharge valve 511 and the second gas discharge valve 512 have been switched to a side connected to the gas discharge pump 521 (gas discharge state) . Then, as the gas discharge pump 521 performs suction, the second liquid holding portion 201 and the third liquid holding portion 301 are subjected to the suction (gas discharge). As a result, a solution being the fine particle suspension 700 from which the fine particles 701 are filtered out (discharged liquid 711) flows into the second liquid holding portion 201 and the third liquid holding portion 301 through the first filter 412 and the second filter 422. At this time, the fine particles 701 are filtered out by the first filter 412 and the second filter 422.

Consequently, as shown in FIG. 8, the discharged liquid 711 is collected in the second liquid holding portion 201 and the third liquid holding portion 301. Moreover, as shown in FIG. 8, the fine particle suspension 700 introduced into the first liquid holding portion 101 by the suction by the gas discharge pump 521 is concentrated down to the vicinity of around the measurement portion 113 provided below the second filter 422. Being concentrated down to the vicinity of the measurement portion 113 means that the liquid level of the fine particle suspension 700 reaches the vicinity of the upper end of the measurement portion 113 (the lower end of the second hole 421).

Then, when the fine particle suspension 700 is concentrated down to the vicinity of the measurement portion 113 as shown in FIG. 8, the first gas discharge valve 511 connected to the second liquid holding portion 201 becomes open to the atmosphere. Note that the second gas discharge valve 512 remains switched to the side connected to the gas discharge pump 521 (gas discharge state). As a result, the suction filtration by the first filter 412 stops, and only the suction filtration by the second filter 422 continues. That is, the filtration is performed only by the second filter 422 (third liquid holding portion 301).

Subjecting the second liquid holding portion 201 to suction in the state of FIG. 8 may suck the fine particle suspension 700 until its liquid level falls to a position below the upper end of the measurement portion 113. In contrast, by subjecting only the third liquid holding portion 301 to suction, the solution in the fine particle suspension 700 will not be discharged any further into the third liquid holding portion 301 after the liquid level of the fine particle suspension 700 reaches the upper end of the measurement portion 113.

Thereafter, as the fine particle suspension 700 is concentrated down to below the second filter 422 as shown in FIG. 9, the suction by the gas discharge pump 521 stops. As a result, the filtration by the second filter 422 stops, and the concentrated fine particle suspension 700 is retained in the measurement portion 113 below the second filter 422. The fine particle suspension 700 retained in the measurement portion 113 will be referred to as the concentrated liquid as appropriate. By adjusting the first gas discharge valve 511 by the method shown in FIGs. 7 to 9, the fine particle suspension 700 can be concentrated to a certain amount. Thereafter, a reagent and/or the like is added to the concentrated liquid, and then the second liquid holding portion 201 is subjected to further suction to collect the concentrated liquid retained in the measurement portion 113 into the second liquid holding portion 201. Thereafter, the first filter 412 is collected. This process will be described later.

### (Area of First Hole 411)

FIG. 10 is a table showing recommended numerical values regarding the area of the first hole 411.

As shown in FIG. 10, the area of the first hole 411, at which fine particles 701 are collected, is determined by the number of fine particles 701 in the fine particle suspension 700, the observation area per field of view in the microscopic observation, and the particle density per observation area. The observation area per field of view of the microscope is determined by the magnification of the microscope for observation.

Assume, for example, that a filtration device 1 with a first hole 411 having a diameter of φ2.5 mm is used to perform suction filtration of 50 mL of a fine particle suspension 700 with fine particles 701 at a density of 2000 particles/mL, followed by a microscopic observation within an observation field of view of 0.001 mm². In this case, 20 fine particles 701 can be observed per field of view. The area of an observed image per field of view of the microscope in observation at a magnification of 100x to 10000x is 0.0001 to 0.01 mm². By concentrating and collecting fine particles 701 at such a density that one or more fine particles 701 can be observed per field of view, a fine particle or particles 701 can be observed by viewing any field of view. In other words, the density of the fine particles 701 and the diameter of the first hole 411 (first filter 412) are adjusted to achieve such density that one or more fine particles 701 can be observed per field of view. Doing so allows a fine particle or particles 701 to be observed from any field of view, and can shorten the observation time.

Note that a bubble may be formed on a portion of the first filter 412 if the diameter of the first hole 411 is large. The formation of a bubble on the first filter 412 as above leads to a state where fine particles 701 will not be collected there. In such a case, the evenness in distribution of the fine particles 701 on the first filter 412 cannot be maintained. Also, if the diameter of the first hole 411 is small and its entire bottom surface is covered by a bubble, it may be impossible to perform the suction filtration and collect particles. It is desirable that the size of the diameter of the first hole 411 be approximately φ0.5 to 6 mm although this depends on conditions such as the concentration of the liquid and the amount of the liquid.

The filtration device 1 in the first embodiment has the first filter 412 installed at the first hole 411 and the second filter 422 installed at the second hole 421. Performing filtration with multiple filters as above can shorten the filtration time. Also, the area of the second hole 421 (i.e., the area of the second filter 422) is larger than the area of the first hole 411 (first filter 412). Such a configuration can further shorten the filtration time. Also, the filtration device 1 in the first embodiment can efficiently concentrate a large amount of a lowconcentration fine particle suspension and further collect fine particles over an area suitable for observation.

Also, in the process of concentrating the solution (fine particle suspension 700), a certain amount of the liquid can be retained by including the measurement portion 113. Also, by adding an additive to the solution (fine particle suspension 700) retained in the measurement portion 113, a process of reacting the fine particles 701 and the additive with each other at a desired (predetermined) concentration can take place at the measurement portion 113. Also, by filtering out the fine particles 701 with the first filter 412, which has a small filtration area, the fine particles 701 can be collected at a density suitable for microscopic observation, thus allowing for easy microscopic observation.

### [Second Embodiment]

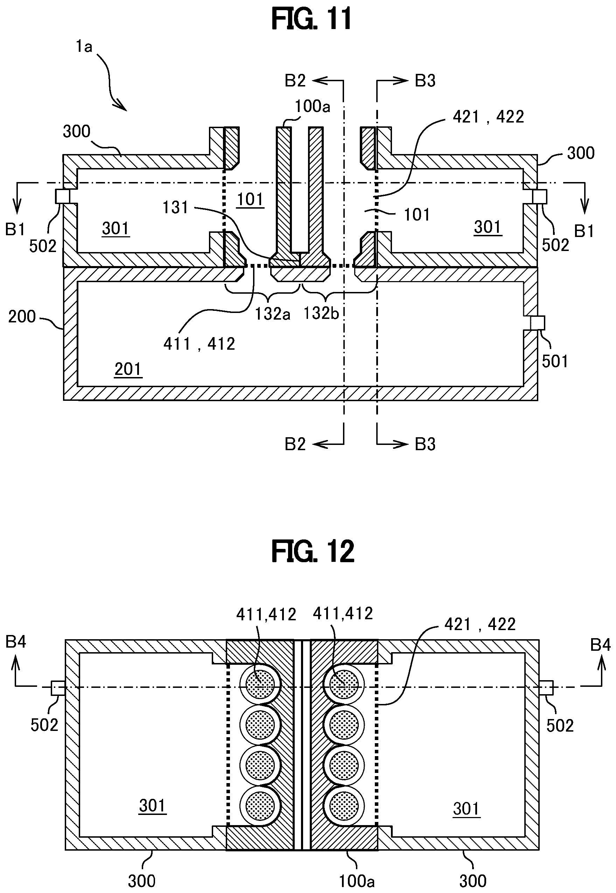

Next, a second embodiment of the present invention will be described with reference to FIGs. 11 to 14.

The second embodiment adds further constituent elements to the filtration device 1 in the first embodiment. In the following, description of common features to those of the first embodiment may be omitted.

FIGs. 11 to 14 are schematic views showing an example of a configuration of a filtration device 1a according to the second embodiment. FIGs. 11 to 14 show an example of a configuration of a multi-well filtration device 1a having multiple first holes 411.

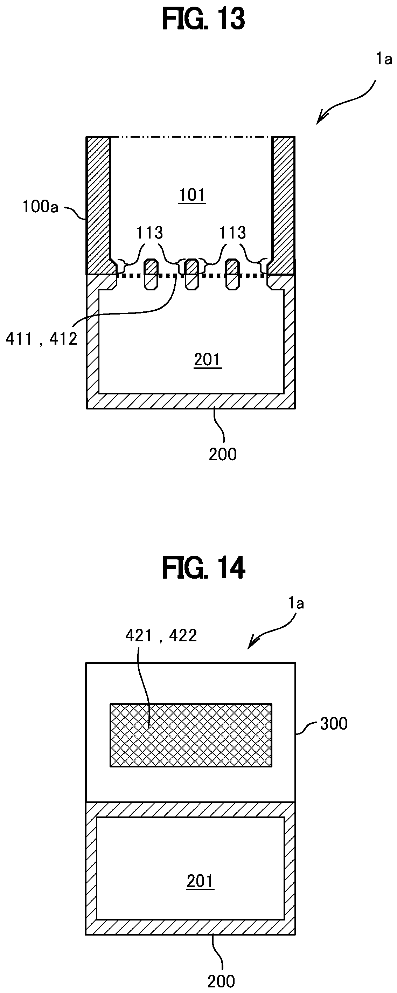

FIG. 11 is a view showing a vertical cross section of the filtration device 1a (the B4-B4 cross section in FIG. 12). Also, FIG. 12 is a cross-sectional view as seen along the arrows B1-B1 in FIG. 11. Moreover, FIG. 13 is a view showing a cross section as seen along the arrows B2-B2 in FIG. 11. Furthermore, FIG. 14 is a view showing a cross section as seen along the arrows B3-B3 in FIG. 11.

A first member 100a of the filtration device 1a has a configuration in which the first holes 411 are arranged in two parallel arrays. Moreover, a first filter 412 is provided at each of the first holes 411. In the example shown in FIGs. 11 to 13, each array of first holes 411 is provided with four first holes 411. Note that the arrays of first holes 411 may be referred to simply as "arrays" in the following. As described above, the filtration device 1a is provided with multiple first holes 411, and a first filter 412 is provided for each first hole 411.

Also, second holes 421 and second filters 422 are provided in such a way as to correspond to the arrays of the first holes 411. Further, third liquid holding portions 301 are provided in such a way as to correspond to the arrays of first holes 411. Specifically, one second hole 421, one second filter 422, and one third liquid holding portion 301 are provided for one array of the first hole 411.

As shown in FIG. 12, the first holes 411 arranged in one array are disposed at equal intervals. Note that the first holes 411 do not necessarily need to be disposed at equal intervals. Also, the number of first holes 411 is determined by the range of movement of the microscope stage, the interval between first holes 411, and so on.

Also, in the filtration device 1a, a first liquid holding portion 101 is provided for each array, as shown in FIG. 13. That is, a common first liquid holding portion 101 is provided for the first holes 411 forming an array. Thus, in the filtration device 1a, a common first liquid holding portion 101, second hole 421, and second filter 422 are provided for multiple first holes 411.

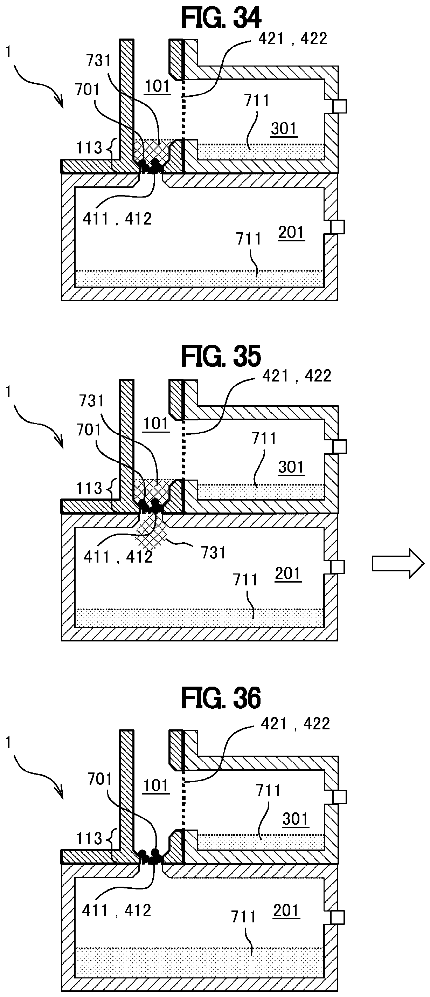

In addition to the advantageous effects described in the first embodiment, the filtration device 1a having such a configuration is suitable for filtering one type of fine particle suspension 700 with the first filter 412 provided for one array. That is, the filtration device 1a is capable of filtering one type of fine particle suspension 700 per array of first holes 411. However, as shown in FIG. 13, measurement portions 113 are provided in such a way as to correspond to the first holes 411. Specifically, the portions of the first liquid holding portion 101 above the measurement portions 113 are joined. Moreover, a different reagent 731 (see FIG. 35) can be added to fine particles 701 filtered out by each first filter 412.

Also, each of the first holes 411 in one array can have an equal area (have an equal diameter). In this case, each of the first filters 412 forming one array can collect an equal amount of fine particles 701 in the fine particle suspension 700 in a filtered state. Also, the same fine particle suspension 700 may be introduced into the first liquid holding portions 101 provided in parallel to each other, or fine particle suspensions 700 in which different fine particles 701 are suspended may be introduced into them. As shown in FIG. 11, the second holes 421 are present above the measurement portions 113. Also, as shown in FIGs. 12 to 14, the second holes 421 and the second filters 422, which connect to the first liquid holding portions 101, are provided in such a way as to correspond to the first liquid holding portions 101. Specifically, one second hole 421 and one second filter 422 are provided for one first liquid holding portion 101. That is, one second hole 421, one second filter 422, and one third liquid holding portion 301 are provided for one array of the first hole 411, as described earlier.

Incidentally, in the filtration device 1a too, the first member 100a is attachable to and detachable from a second member 200 and third members 300. Also, a common second liquid holding portion 201 and a third liquid holding portion 301 are provided for each first liquid holding portion 101. Note that the total area of the first filters 412 is less than the area of the second filter 422.

Also, as shown in FIG. 11, the first member 100a of the filtration device 1a is divided into members with reference sign 131 respectively denoted by reference signs 132a and 132b. Such a configuration allows the user to individually detach each of the members denoted by reference signs 132a and 132b from the second member 200 and the third member 300. Here, the first member 100a does not need to be divided as shown in FIG. 11.

### [Third Embodiment]

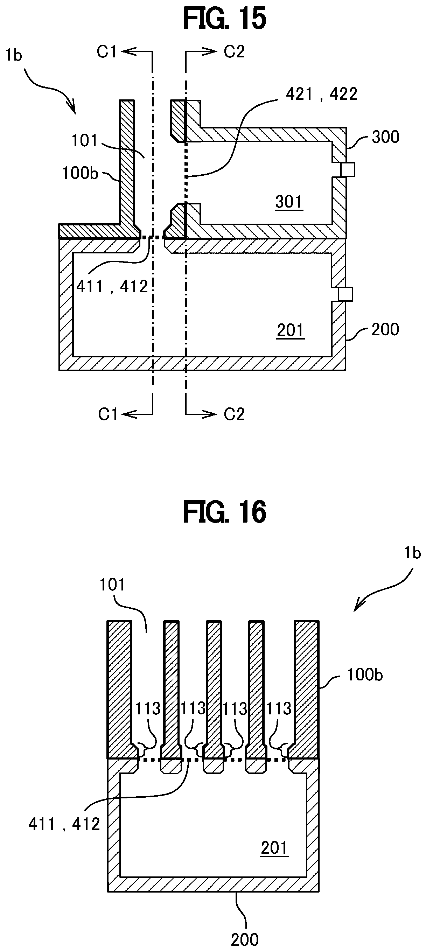

Next, a third embodiment of the present invention will be described with reference to FIGs. 15 to 18.

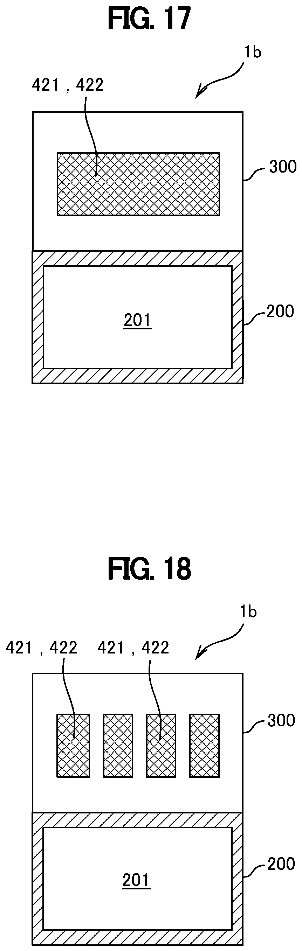

FIGs. 15 and 18 are schematic views showing examples of a configuration of a filtration device 1b according to the third embodiment. FIGs. 15 to 18 show an example of a configuration of a multi-well filtration device 1b having multiple first holes 411.

FIG. 15 is a schematic view showing an example of the configuration of the filtration device 1b according to the third embodiment.

FIG. 15 shows a vertical cross-sectional view of the filtration device 1b, and FIG. 16 is a cross-sectional view as seen along the arrows C1-C1 in FIG. 15. Also, FIG. 17 is a cross-sectional view as seen along the arrows C2-C2 in FIG. 15.

As shown in FIGs. 15 and 16, in the filtration device 1b, a first member 100b is provided with one array of first holes 411. Alternatively, two arrays of first holes 411 may be disposed in parallel to each other as shown in FIG. 11. The one array is provided with multiple first holes 411 (four in the example shown in FIG. 16). As described above, the filtration device 1b is provided with multiple first holes 411, and a first filter 412 is provided for each first hole 411.

Moreover, as shown in FIG. 16, a first liquid holding portion 101 is provided for each of the multiple first holes 411. That is, a first liquid holding portion 101 is provided independently for each of the first holes 411 arranged in one array. Also, as shown in FIG. 16, a measurement portion 113 is provided for each of the first liquid holding portions 101. With such a configuration, the type of fine particle suspension 700 to be introduced into each first liquid holding portion 101 can be different. That is, one or more (multiple) types of fine particle suspension 700 can be introduced into the filtration device 1b. In this way, different fine particle suspensions 700 can be filtered by the individual first filters 412. Also, as shown in FIG. 15, the lower end of a second hole 421 is provided at least above the measurement portions 113. Also, as shown in FIG. 17, a second filter 422 which connects to the first liquid holding portions 101 can be formed of one filter.

Note that a common second liquid holding portion 201 and third liquid holding portion 301 are provided for each first liquid holding portion 101.

FIG. 18 is a view showing another example of the filtration device 1b.

As shown in FIG. 18, the second filter 422, which connects to the first liquid holding portions 101, may be provided in such a way as to correspond to each of the multiple first liquid holding portions 101.

Note that, in the filtration device 1b, the total area of the first filters 412 is less than the total area of the second filters 422. However, the total area of the first filters 412 may be more than or equal to the total area of the second filters 422.

### [Fourth Embodiment]

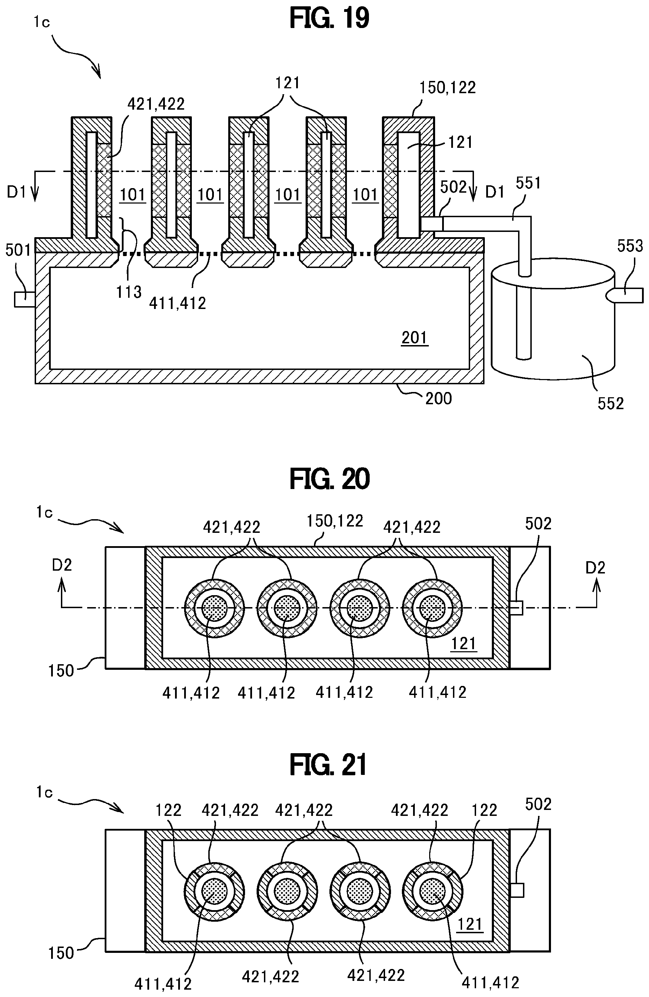

Next, a fourth embodiment of the present invention will be described with reference to FIGs. 19 to 22.

FIGs. 19 and 20 are schematic views showing an example of a configuration of a filtration device 1c according to the fourth embodiment. FIGs. 19 and 20 show schematic views representing an example of a configuration of a multi-well filtration device 1c provided with multiple first holes 411.

FIG. 19 shows a vertical cross-sectional view of the filtration device 1c (a cross-sectional view as seen along the arrows D2-D2 in FIG. 20), and FIG. 20 show a horizontal cross-sectional view of the filtration device 1c (a cross-sectional view as seen along the arrows D1-D1 in FIG. 19). Note that illustration of a liquid discharge pipe 551 and a discharged liquid collector 552 is omitted in FIG. 20.

As shown in FIGs. 19 and 20, the filtration device 1c includes a fourth member 150, which is a first container, and a second member 200. The fourth member 150 corresponds to the first member 100a and the third members 300 shown in FIGs. 11 to 18.

Also, in the filtration device 1c, a housing 122 of the fourth member 150 forms multiple recesses to form multiple (four in the example shown in FIGs. 19 and 20) first liquid holding portions 101. Also, multiple (four in the example shown in FIGs. 19 and 20) first holes 411 are provided, and a first filter 412 is provided at each first hole 411. Moreover, in the filtration device 1c, second holes 421 are provided in the fourth member 150 (first container) together with the first liquid holding portions 101. Further, a first liquid holding portion 101 is provided for each of the multiple first holes 411 mentioned above. Furthermore, as shown in FIG. 20, a space 121 corresponding to a third liquid holding portion 301 is provided between the first liquid holding portions 101 and the housing 122.

Also, second filters 422 are provided in part of wall surfaces forming the first liquid holding portions 101. Note that the second filters 422 are provided in the second holes 421, which are provided in the side surfaces of the first liquid holding portions 101. Thus, the space 121 is provided between the peripheries of the second holes 421 and the housing 122 of the fourth member 150, which is the first container. In the example shown in FIG. 20, tubular second filters 422 are provided around the first liquid holding portions 101, but the second filters 422 are not limited to these. As shown in FIG. 21, the second filters 422 may be provided only on part of the peripheries of the first liquid holding portions 101. In this case, the housing 122 forms the first liquid holding portions 101 besides the part where the second filters 422 are provided. Also, the portions from the lower ends of the second holes 421 to the bottom surfaces (bottom portions) of the first liquid holding portions 101 are provided as measurement portions 113.

Moreover, the housing 122 is provided with a second gas discharge port 502. The space 121 is connected to the discharged liquid collector 552 by the second gas discharge port 502 and the liquid discharge pipe 551. A gas discharge pump 521 (see FIG. 3) is connected to a suction connector 553 connected to an upper portion of the discharged liquid collector 552. After a fine particle suspension 700 (see FIG. 7, etc.) is introduced into the first liquid holding portions 101, the gas discharge pump 521 connected to the suction connector 553 performs suction. As a result, a pressure difference is generated between the space 121 connected to the discharged liquid collector 552 and the first liquid holding portions 101. This pressure difference discharges a discharged liquid 711 (see FIGs. 8 and 9) to the outside of the first liquid holding portions 101 through the second filters 422. The discharged the discharged liquid 711 is collected into the discharged liquid collector 552 through the liquid discharge pipe 551.

Also, upper portions of the first liquid holding portions 101 and an upper portion of the housing 122 are joined. Thus, the space 121 is sealed except at the second gas discharge port 502.

Note that not all of the first liquid holding portions 101 do not need to have a configuration as that in FIG. 20 or 21. For example, a common first liquid holding portion 101 may be provided for the multiple first filters 412 ()the first liquid holding portions 101 shown in FIGs. 19 and 20 may be coupled).

As shown in FIGs. 19 and 20, in the filtration device 1c, the second filters 422 form side surfaces (wall surfaces) forming the first liquid holding portions 101. Also, in the filtration device 1c, the housing 122 ensures the airtightness of the space 121 on the outside of the first liquid holding portions 101. As the space 121 is subjected to suction by the gas discharge pump 521 connected to the second gas discharge port 502, the fine particle suspension 700 gets filtered by the second filters 422 provided around the first liquid holding portions 101.

Also, the bottom surface of each first liquid holding portion 101 is a first hole 411. Moreover, as shown in FIGs. 20 and 21, the first liquid holding portions 101 are disposed at equal intervals. Note that the first liquid holding portions 101 do not necessarily need to be disposed at equal intervals. Also, the housing 122 forms a single highly airtight space 121 on the outside of the first liquid holding portions 101, as described above.

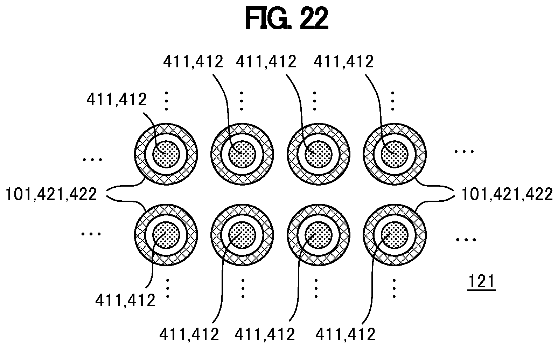

FIG. 22 is a view showing a modification of the arrangement of first liquid holding portions 101.

In the example shown in FIG. 22, first liquid holding portions 101 are disposed at equal intervals a row direction and a column direction. The peripheries of the first liquid holding portions 101 disposed at equal intervals are covered by a housing 122 as shown in FIG. 20 or 21, and the space between the housing 122 and each first liquid holding portion 101 is substantially sealed. Note that in FIG. 22 too, the second filters 422 are provided in the second holes 421.

In the configuration of the filtration device 1c, the space 121 provided around the first liquid holding portions 101 corresponds to a third liquid holding portion 301, and a third liquid holding portion 301 does not need to be provided as in the first to third embodiments. Hence, theoretically, first holes 411 (i.e., tubular containers) can be disposed as shown in FIG. 22 without limitation. The number of first holes 411 is determined by the range of movement of the microscope stage and the interval between first holes 411.

### [Fifth Embodiment]

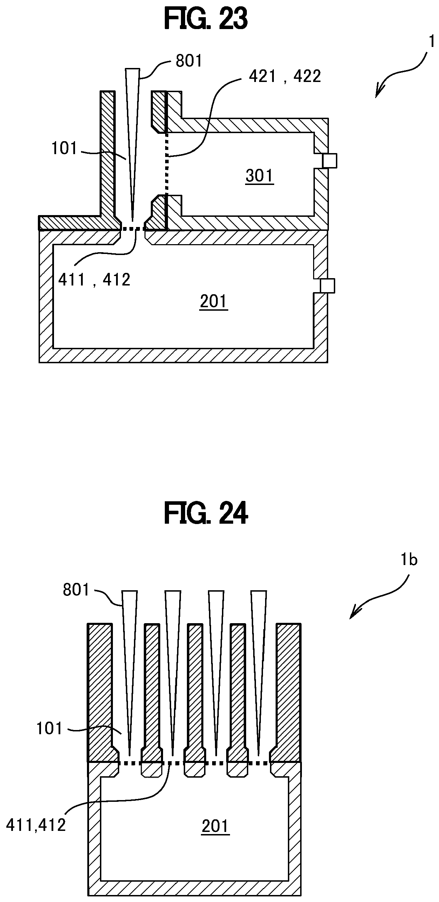

Next, a fifth embodiment of the present invention will be described with reference to FIGs. 23 and 24.

FIGs. 23 and 24 are views showing filtration devices 1 according to the fifth embodiment.

The filtration devices 1 according to the fifth embodiment have a liquid delivery nozzle or nozzles 801 capable of introducing a liquid into a first liquid holding portion or portions 101. The liquid delivered by the liquid delivery nozzle or nozzles 801 is a fine particle suspension 700 or the like.

FIG. 23 shows the filtration device 1 according to the first embodiment that includes a liquid delivery nozzle 801, and FIG. 24 shows the filtration device 1b according to the third embodiment that includes liquid delivery nozzles 801.

With the configurations shown in FIGs. 23 and 24, when the fine particle suspension 700 is delivered into the first liquid holding portion or portions 101, the liquid can be discharged toward the first filter or filters 412 from a predetermined position (predetermined height) at a predetermined speed. The predetermined position (predetermined height) refers to such a height from the first filter or filters 412 that no bubbles will be generated on the surface of the first filter or filters 412. When the diameter of the first hole or holes 411 is small, delivering the fine particle suspension 700 from a high position from the first filter 412 may result in bubbles covering the entire bottom surface or surfaces. Such a case may lead to a state where it is impossible to perform suction filtration and collect the fine particles 701. Incidentally, one may consider increasing the intensity of the suction by the gas discharge pump 521 to suck the bubbles toward the second liquid holding portion 201. However, it is not preferable to suck the bubbles with the gas discharge pump 521 because intensely sucking the fine particle suspension 700 is not preferable and makes it difficult to retain it in the measurement portion or portions 113 and due to other similar reasons.

With the configurations shown in FIGs. 23 and 24, the liquid delivery nozzle or nozzles 801 are positioned near the first filter or filters 412, and then the fine particle suspension 700 is delivered from the liquid delivery nozzle or nozzles 801. In this way, the fine particle suspension 700 delivered from the liquid delivery nozzle or nozzles 801 can displace the air around the first filter or filters 412. This makes it possible to avoid formation of bubbles on the first filter or filters 412.

Meanwhile, even when the fine particle suspension 700 is delivered using a configuration as shown in FIG. 23 or 24, bubbles may still cover the entire bottom surface of the first hole or holes 411, i.e., the entire upper surface of the first filter or filters 412. Such a state may also result in a case where the fine particle suspension 700 cannot be filtered by suction with the gas discharge pump 521. In such a case, the liquid delivery nozzle or nozzles 801 are positioned closer to the first filter or filters 412 than during the delivery of the fine particle suspension 700, and suck and discharge the fine particle suspension 700 at a predetermined speed one or more times. By doing so, the bubbles can be sucked by and disappear in the liquid delivery nozzle or nozzles 801 or let the bubbles escape into the fine particle suspension 700. In this way, the bubbles can be removed from the bottom surface of the first hole or holes 411 (i.e., the upper surface of the first filter or filters 412).

As described above, when the first hole or holes 411 are not filled with a fine particle suspension 700, the liquid delivery nozzle or nozzles 801 are placed at a predetermined position relative to the first filter or filters 412. When the first hole or holes 411 are not filled with a fine particle suspension 700 refers to a case where bubbles are present in the first hole or holes 411 (on the upper surface of the first filter or filters 412), as described earlier. Also, the predetermined position refers to a position suitable for removing bubbles. The fine particle suspension 700 is then discharged at a predetermined speed from the liquid delivery nozzle nor nozzles 801. The predetermined speed refers to a speed suitable for moving bubbles. Also, bubbles may remain in the first hole or holes 411 even after the fine particle suspension 700 is introduced into the first liquid holding portion or portions 101. In such a case, the bubbles can be removed by placing the liquid delivery nozzle or nozzles 801 near the first filter or filters 412 and causing the liquid delivery nozzle or nozzles 801 to repeat suction and delivery of the liquid, as described above. Note that this process does not need to be performed when the first hole or holes 411 (i.e., the upper surface of the first filter or filters 412) are not filled with a fine particle suspension 700.

As shown in FIG. 24, for the multi-well filtration device 1b with independent first liquid holding portions 101, a liquid delivery nozzle 801 can be placed in each of the first liquid holding portions 101. In this way, when a liquid is delivered into the first liquid holding portions 101, the liquid can be delivered individually into each single first hole 411 or delivered into the multiple first holes 411 at once with multiple liquid delivery nozzles 801.

Meanwhile, there may be a case where there are no independent first liquid holding portions 101 for the first holes 411, as shown in FIGs. 11 to 14. Specifically, it is a case where a common first liquid holding portion 101 is provided for multiple first holes 411. In such a case, when introducing a liquid into the first liquid holding portion 101, it is preferable to deliver the liquid into the first holes 411 simultaneously with multiple liquid delivery nozzles 801. The simultaneous delivery of the liquid with multiple liquid delivery nozzles 801 can prevent bubbles from moving to the next first hole 411 (i.e., first filter 412). In such a case, a dispenser (not shown) having multiple pipettes (multi-channel pipette) corresponding to the liquid delivery nozzles 801 may be advantageously used to simultaneously dispense the fine particle suspension 700 into the multiple first holes 411. In particular, by adjusting the interval between the first holes 411 to a commercially available multi-channel pipette, the liquid can be simultaneously delivered into the multiple first holes 411. Alternatively, the interval between the first holes 411 may be set according to the interval of a multi-channel pipette that has been designed as desired.

Note that the placement of the liquid delivery nozzle or nozzles 801 into the first liquid holding portion or portions 101 and the delivery of a fine particle suspension 700 with the liquid delivery nozzle or nozzles 801 may be done manually or by a machine.

### [Sixth Embodiment]

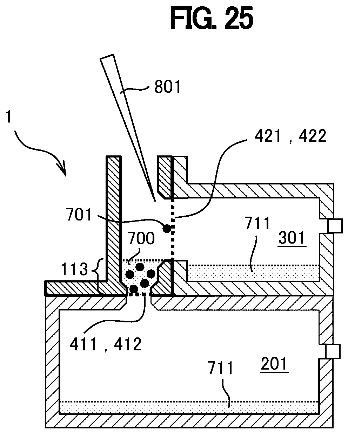

Next, a sixth embodiment of the present invention will be described with reference to FIG. 25.

FIG. 25 is a view showing an example of a configuration of a filtration device 1 according to the sixth embodiment.

The filtration device 1 shown in FIG. 25 is the filtration device 1 shown in FIG. 1 and has a liquid delivery nozzle 801 capable of introducing a liquid into the first liquid holding portion 101. The liquid is a fine particle suspension 700 or a washing liquid. After filtering the fine particle suspension 700 through the procedure shown in FIGs. 7 and 9, fine particles 701 may be found captured on the second filter 422. In such a case, a predetermined liquid delivered onto the second filter 422 from the liquid delivery nozzle 801. The predetermined liquid is a fine particle suspension 700 or a washing liquid. Doing so washes the fine particles 701 captured on the second filter 422. As a result, the fine particles 701 captured on the second filter 422 can be brought back into the fine particle suspension 700 introduced in the first liquid holding portion 101. Note that at least the first hole 411 is desirably filled with the liquid at this time.

Note that the method shown in FIG. 25 is applicable not only to the filtration device 1 shown in the first embodiment but also to the filtration devices 1a to 1c shown in the second to fifth embodiments. For the filtration device 1a shown in the second embodiment (FIGs. 11 to 14), in which there are no independent first liquid holding portions 101 for the first holes 411, it is preferable to deliver the liquid in a state where the liquid level of the suspension is above the measurement portions 113. This is because, if the second filters 422 are washed with the liquid delivery nozzle 801 in a state where the liquid level of the fine particle suspension 700 is below the lower ends of the second filters 422, fine particles 701 may flow into specific measurement portions 113, which leads to a possibility of causing a difference in concentration between the fine particle suspensions 700 retained in the measurement portions 113.

Also, the method shown in the sixth embodiment is applicable to the filtration device 1b shown in the third embodiment (FIGs. 15 to 18) and the filtration device 1c shown in the fourth embodiment (FIGs. 19 to 22). In the filtration devices 1b and 1c, a first liquid holding portion 101 is provided independently for each first hole 411. In the case of washing the second filter or filters 422 in the filtration devices 1b and 1c by the method shown in the sixth embodiment, it suffices that at least the first holes 411 are filled with a liquid. This is because there is no possibility of causing a difference in concentration between the fine particle suspensions 700 retained in the measurement portions 113, unlike the above-described case with the filtration device 1a shown in the second embodiment.

### [Seventh Embodiment: Filtration Method]

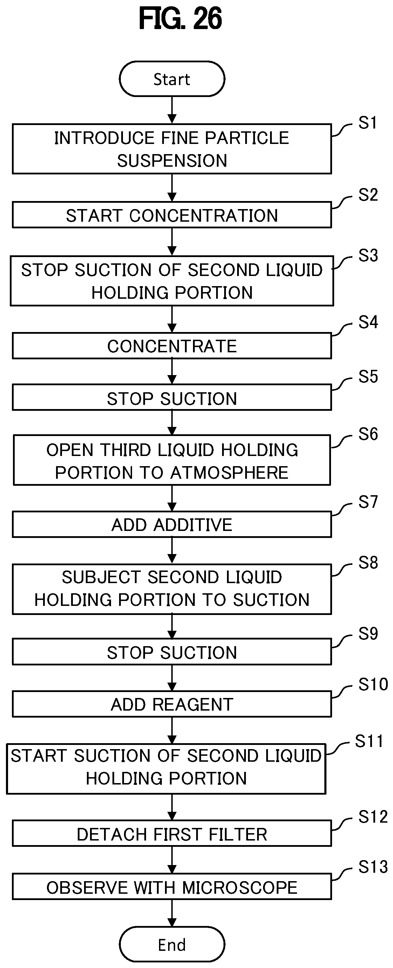

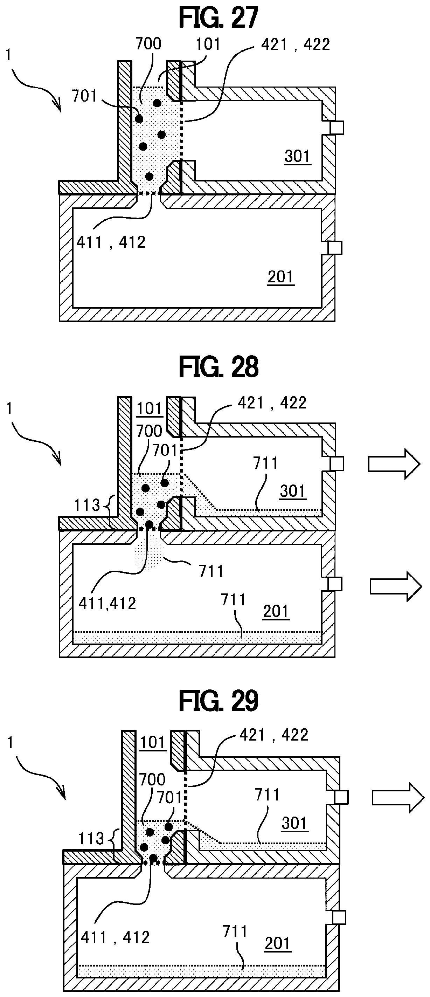

Next, a process of filtering a fine particle suspension 700 using a filtration device 1 will be shown with reference to FIGs. 27 to 36 along with the flowchart of FIG. 26.

FIG. 26 is a flowchart showing a procedure of a filtration method according to the present embodiment. FIGs. 27 to 36 are schematic views for describing the procedure of the filtration method according to the present embodiment. Note that FIGs. 27 to 36 use the filtration device 1 shown in the first embodiment but a fine particle suspension 700 can also be concentrated and collected through similar procedures with the filtration devices 1a to 1c according to the second to fourth embodiments. Also, the step numbers in the following description represent the step numbers in the flowchart shown in FIG. 26. Also, the filtration device 1 is assumed to be connected to the gas discharge pump 521 as shown in FIG. 3. The description of FIGs. 27 to 36 will refer to FIG. 3 as appropriate. Also, in FIGs. 26 to 36, the control device 600 is assumed to control the first gas discharge valve 511, the second gas discharge valve 512, and the gas discharge pump 521.

First, as shown in FIG. 27, a fine particle suspension 700 is introduced into the first liquid holding portion 101 (S1). At this time, it is desirable that a liquid delivery nozzle 801 deliver the liquid onto the first filter 412 from a predetermined position at a predetermined liquid delivery speed, as shown in FIGs. 23 and 24. The predetermined position and the predetermined liquid delivery speed are such a position and liquid delivery speed of the liquid delivery nozzle 801 as not to form bubbles on the surface of the first filter 412. That is, when the fine particle suspension 700, which is a liquid, is introduced into the first liquid holding portion 101 from the liquid delivery nozzle 801, it is introduced through the following step. Specifically, the fine particle suspension 700 is introduced from the liquid delivery nozzle 801 onto the first filter 412 from such a height as not to form bubbles on the surface of the first filter 412. This can avoid a problem that bubbles cover the entire surface of the first filter 412 due to the small diameter of the first hole 411, making it impossible to perform suction filtration and collect the fine particles 701.

Next, as shown in FIG. 28, concentration by suction filtration through the first filter 412 and the second filter 422 is started (S2). Specifically, the control device 600 switches the first gas discharge valve 511 and the second gas discharge valve 512 shown in FIG. 3 to connect them to the gas discharge pump 521 (see FIG. 3) side. Then, the control device 600 performs gas discharge with the gas discharge pump 521 to discharge gas from the second liquid holding portion 201 and the third liquid holding portion 301 (the white arrows in FIG. 28).

Note that step S2 is a first process. Specifically, in step S2, after the fine particle suspension 700 containing fine particles 701 is introduced into the first liquid holding portion 101, the gas discharge pump 521 discharges gas from the second liquid holding portion 201 and the third liquid holding portion 301.

As a result, the fine particle suspension 700 is subjected to suction filtration by the first filter 412 and the second filter 422. By such suction filtration, a discharged liquid 711 is discharged into the second liquid holding portion 201 and the third liquid holding portion 301. Note that, if bubbles are formed on the bottom surface of the first hole 411 (i.e., the surface of the first filter 412), they may block the suction filtration by the first filter 412. In such a case, the liquid delivery nozzle 801 repeats suction and discharge with its tip positioned near the first filter 412, as shown in FIGs. 23 and 24. Doing so can remove the bubbles from the bottom surface of the first hole 411 (the surface of the first filter 412).

Subsequently, as shown in FIG. 29, when the liquid level of the fine particle suspension 700 reaches the vicinity of the measurement portion 113 (near the lower end of the second hole 421), the control device 600 stops of the suction of the second liquid holding portion 201 (S3). Then, the control device 600 switches the first gas discharge valve 511 to the atmospherically open side. As a result, the second liquid holding portion 201 becomes open to the atmosphere. Then, after the second liquid holding portion 201 becomes open to the atmosphere, only the third liquid holding portion 301 is subjected to gas discharge (the white arrow in FIG. 29). That is, after the second liquid holding portion 201 becomes open to the atmosphere, the concentration is continuously performed by the suction filtration only through the second filter 422 (S4). In other words, the control device 600 continues the gas discharge of the third liquid holding portion 301. By doing so, the upper end of the measurement portion 113 and the liquid level of the fine particle suspension 700 can be aligned with each other. As mentioned earlier, subjecting the second liquid holding portion 201 to suction in the state of FIG. 29 may suck the fine particle suspension 700 until its liquid level falls to a position below the upper end of the measurement portion 113. In contrast, by subjecting only the third liquid holding portion 301 to suction, the solution in the fine particle suspension 700 will not be discharged any further into the third liquid holding portion 301 after the liquid level of the fine particle suspension 700 reaches the upper end of the measurement portion 113. Incidentally, the third liquid holding portion 301 is at a negative pressure, so that the solution in the fine particle suspension 700 will not drip into the second liquid holding portion 201. At this time, a fine particle suspension 700, a washing liquid, or the like may be delivered onto the second filter 422 as shown in FIG. 25 in order to bring the fine particles 701 captured on the second filter 422 back into the fine particle suspension 700.

Note that step S3 is a second process. Specifically, in step S3, the gas discharge from the second liquid holding portion 201 is stopped in response to the liquid level of the fine particle suspension 700 reaching the vicinity of the lower end of the second hole 421. Then, step S4, the gas discharge from the third liquid holding portion 301 is continued.

Also, the solution in the fine particle suspension 700 may be gradually replaced with a different type of solution. In such a case, the replacement solution is delivered into the first liquid holding portion 101, and the concentration and the discharge in step S1 to S3 are repeated. In this way, the solution in the fine particle suspension 700 can be replaced.

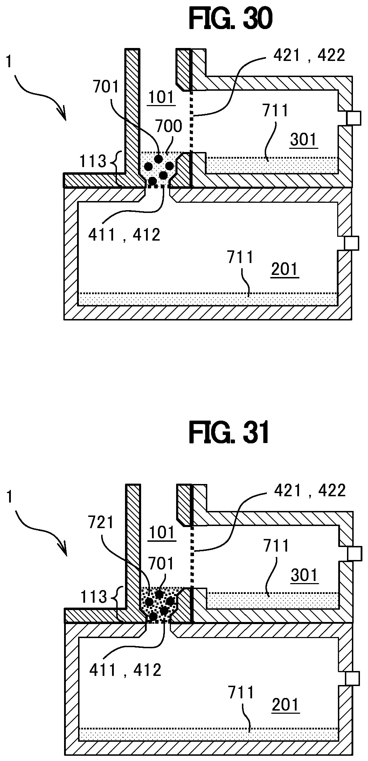

Then, as shown in FIG. 30, the concentration is continued until the liquid level of the fine particle suspension 700 is at the upper end of the measurement portion 113 (reaches the lower end of the second hole), and the liquid stops being discharged into the third liquid holding portion 301. In response to this, the control device 600 stops the suction filtration by the gas discharge pump 521 (S5). Then, the control device 600 switches the second gas discharge valve 512 to the atmospherically open side. As a result, the third liquid holding portion 301 also becomes open to the atmosphere (S6). In this way, the concentrated solution can be held within the capacity of the measurement portion 113. By concentrating the fine particle suspension 700 down to the measurement portion 113 as described above, the amount of the fine particle suspension 700 (concentrated liquid) can be constant.

Step S5 is a third process. Specifically, in step S5, the gas discharge from the third liquid holding portion 301 is stopped in response to the liquid level of the fine particle suspension 700 reaching the lower end of the second hole 421.

In the case of adding an additive to the fine particle suspension 700, the additive is added to the concentrated fine particle suspension 700 (concentrated liquid) (S7). As a result, as shown in FIG. 31, the fine particle suspension 700 becomes an additive mixture 721 as a mixture (liquid) of the fine particle suspension 700 and the additive. Since the amount of the concentrated liquid is constant, the concentration of the additive in the concentrated liquid can be set to a desired concentration based on the amount of the additive to be added. The additive is an antibacterial agent, for example. The antibacterial agent is added to stop the activity of microorganisms being the fine particles 701 with predetermined timing in order to confirm whether the solution in the fine particle suspension 700 is affecting the microorganisms. Note that the solution in the additive mixture 721 will not drip into the second liquid holding portion 201 if it is only for a short time. By step S7, the additive and the fine particle suspension 700 can be reacted in the filtration device 1.

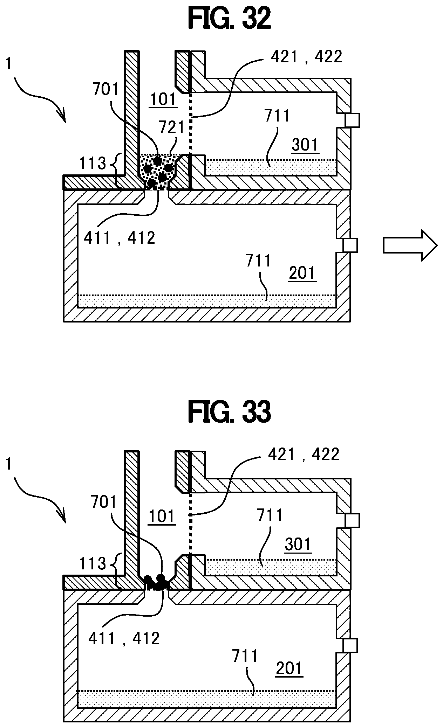

Next, the control device 600 switches the first gas discharge valve 511 to the gas discharge pump 521 side. Then, the control device 600 performs suction with the gas discharge pump 521 to subject the second liquid holding portion 201 to suction (the white arrow in FIG. 32: S8). As a result, the additive mixture 721 is discharged into the second liquid holding portion 201. The discharged liquid 711 is now a mixture of the solution in the fine particle suspension 700 and the additive.

Step S8 is a fourth process. Specifically, in step S8, gas is discharged from the second liquid holding portion 201. In particular, if step S6 is followed by addition of an additive to the fine particle suspension 700 in step S7, gas is discharged from the second liquid holding portion 201.

In step S8, as shown in FIG. 33, all of the solution in the additive mixture 721 (discharged liquid 711) retained in the measurement portion 113 is collected through the first filter 412. As a result, as shown in FIG. 33, the fine particles 701 are collected by the first filter 412.

After finishing the suction filtration of the solution in the additive mixture 721, the control device 600 stops the suction by the gas discharge pump 521 (S9). The fine particles 701 collected by the first filter 412 may be subjected to modifications including an immobilization process and a staining process for microscopic observation. In the case of performing such modifications, the control device 600 stops the suction of the second liquid holding portion 201, as shown in step S9, and switches the first gas discharge valve 511 to the atmospherically open side. Thereafter, as shown in FIG. 34, a reagent 731, which is a liquid, is added to the first filter 412 (S10). The reagent 731 is for performing the modifications, such as the immobilization process and the staining process. Then, the fine particles 701 and the reagent 731 are reacted as needed for a desired time. In this way, the fine particles 701 and the reagent 731 can be reacted within the filtration device 1. In the case of adding the reagent 731, the liquid may be delivered as shown in FIG. 23 or 24. Specifically, the tip of the liquid delivery nozzle 801 for delivering the reagent 731 is placed at a predetermined position relative to the first filter 412, and the liquid delivery nozzle 801 is delivered to the reagent 731. As described earlier, the predetermined position is such a position that the delivered reagent 731 does not form bubbles on the surface of the first filter 412. That is, when the reagent 731, which is a liquid, is introduced into the first liquid holding portion 101 from the liquid delivery nozzle 801, it is introduced through the following step. Specifically, the reagent 731 is introduced from the liquid delivery nozzle 801 onto the first filter 412 from such a height as not to form bubbles on the surface of the first filter 412.

Then, after the reaction of the fine particles 701 with the reagent 731, the control device 600 switches the first gas discharge valve 511 to the gas discharge pump 521 side and performs suction with the gas discharge pump 521. As a result, suction of the second liquid holding portion 201 starts (the white arrow in FIG. 35: S11). By the suction in step S11, the reagent 731 is discharged into the second liquid holding portion 201, as shown in FIG. 35. In the case of washing off the reagent 731, the reagent 731 attached to the fine particles 701 is completely filtered by suction, and then a washing liquid (not shown) is delivered into the first liquid holding portion 101 and the suction filtration of step S11 is performed. In this way, the reagent 731 attached to the fine particles 701 can be washed off, and the washing liquid can be discharged into the second liquid holding portion 201. As described above, the reagent 731 is discharged, the fine particles 701 are washed with a washing liquid, and the fine particles 701 are dried. Note that the discharged liquid 711 is now a mixture of the solution in the fine particle suspension 700, the additive, and the reagent 731.

Step S11 is a fifth process. After the predetermined reagent 731 is added to the fine particles 701 present on the surface of the first filter 412 after step S8, step S11 is performed.

Then, after the reagent 731 (or washing liquid) is completely discharged from the surface of the first filter 412 as shown in FIG. 36, the user detaches the first filter 412 from the filtration device 1 through the step shown in FIG. 4 (S12). Then, the user places the detached first filter 412 on a microscope and observes the first filter 412 (S13).

Note that, in the process shown in FIGs. 27 to 36, a process of delivering a fine particle suspension 700, a washing liquid, or the like onto the second filter 422 as shown in FIG. 25 is performed at the time of step S3, but the timing is not limited to this. The process of delivering a fine particle suspension 700, a washing liquid, or the like onto the second filter 422 as shown in FIG. 25 may be performed at the time when the second filter 422 is exposed. That is, this process of delivering a fine particle suspension 700, a washing liquid, or the like onto the second filter 422 as shown in FIG. 25 may be performed at the time of any of steps S3 (second process) to S13. Nonetheless, the process is ideally performed at the time of one of steps S3 to S8 (fourth process) and further ideally at the time of one of the steps before the addition of an additive (S3 to S6).

The present invention is not limited to the embodiments described above and includes various modifications. For example, the above embodiments have been described in detail in order to describe the present invention to facilitate understanding thereof, and the present invention is not necessarily limited to those including all of the described configurations. Also, part of a configuration in one embodiment can be replaced with a configuration in another embodiment, and a configuration in one embodiment can be added to a configuration in another embodiment as well. Also, another configuration can be added to part of a configuration in each embodiment, or the part of the configuration in each embodiment can be deleted from or replaced with another configuration.

For example, a common first liquid holding portion 101 for multiple first holes 411 as in the second embodiment and first liquid holding portions 101 corresponding to individual first holes 411 as in the third embodiment may be present together. Also, one of the members denoted by reference signs 132a and 132b shown in FIG. 11 may be replaced with the first member 100b shown in FIGs. 15 to 18. Doing so makes it possible to easily implement the state where a common first liquid holding portion 101 for multiple first holes 411 and first liquid holding portions 101 corresponding to individual first holes 411 are present together.

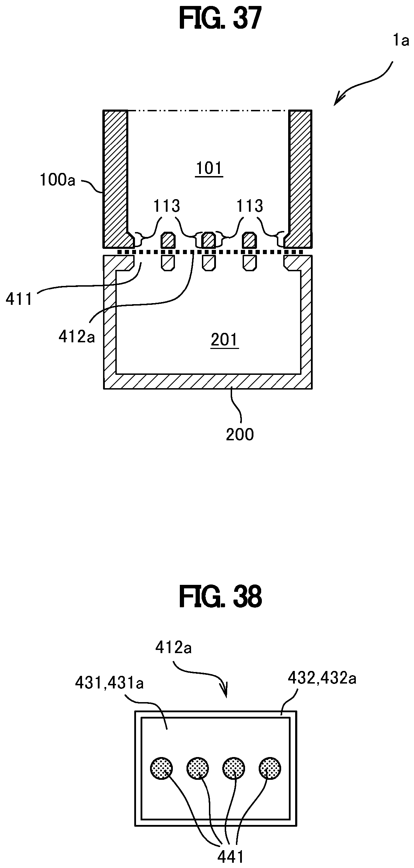

FIG. 37 is a schematic view showing another example of the filtration device 1a according to the second embodiment. Also, FIG. 38 is a view showing a configuration of a first filter 412a as another example used in the filtration device 1a according to the second embodiment.

The first filters 412 may be provided independently in such a way as to correspond to individual first holes 411 as shown in FIG. 13 or formed of a single filter like the first filter 412a shown in FIG. 37. The first filters 412 (see FIG. 13) or the first filter 412a (see FIG. 37) is provided in such a manner for the first holes 411. When the first filter 412a is formed of a single filter, the first filter 412a is provided between the first member 100a and the second member 200, as shown in FIG. 37. Note that the first member 100a and the second member 200 are separated in FIG. 37, but the first member 100a and the second member 200 are in tight contact with each other during filtration of a fine particle suspension 700. Also, during filtration of a fine particle suspension 700, the first filter 412a is fixed by being held between the first member 100a and the second member 200 that are in tight contact with each other. The first member 100a and the second member 200 are configured such that, even when the first filter 412a is held between them, the fine particle suspension 700 to be filtered does not leak.

Also, as shown in FIG. 37, the first member 100a and the second member 200 are separable. This makes the first filter 412a easily detachable.

Also, when the first filter 412a is formed of a single filter, as shown in FIG. 37, the first filter 412a has a configuration in which a frame 432a is provided around a quadrangle filter body 431a, as shown in FIG. 38. In this case, as indicated by reference sign 441 in FIG. 38, portions corresponding to the first holes 411 collect fine particles 701. By employing the configurations shown in FIGs. 37 and 38, setting the first filter 412a once for microscopic observation makes it possible to observe multiple collection results.

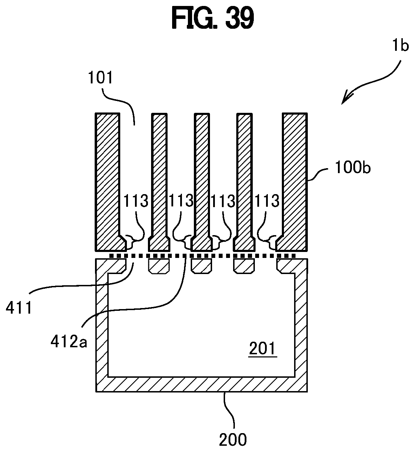

FIG. 39 is a schematic view showing another example of the filtration device 1b according to the third embodiment.

The first filters 412 may be provided independently in such a way as to correspond to individual first holes 411 as described earlier or formed of a single filter as shown in FIG. 39. When a first filter 412a is formed of a single filter, the first filter 412a is provided between the first member 100b and the second member 200, as shown in FIG. 39. Note that the first member 100b and the second member 200 are separated in FIG. 39, but the first member 100b and the second member 200 are in tight contact with each other during filtration of a fine particle suspension 700. Also, during filtration of a fine particle suspension 700, the first filter 412a is fixed by being held between the first member 100b and the second member 200 that are in tight contact with each other. The first member 100b and the second member 200 are configured such that, even when the first filter 412a is held between them, the fine particle suspension 700 to be filtered does not leak.

Also, as shown in FIG. 39, the first member 100b and the second member 200 are separable. This makes the first filter 412a easily detachable.

Moreover, as shown in FIG. 39, when the first filter 412a is formed of a single filter, the configuration of the first filter 412a and its portions to collect fine particles 701 are similar to those shown in FIG. 38.

Also, part or the entirety of the control device 600 and so on described above may be implemented with hardware by designing integrated circuits or by other similar means, for example. Alternatively, the configurations, functions, and so on of the control device 600 may be implemented with software by causing a processor, such as a CPU, to interpret and execute programs for implementing the respective functions. The information of the programs, tables, files, and so on that implement the functions of the control device 600 can be stored not only in a HD (Hard Disk) but also in recording devices such as a memory or an SSD (Solid State Drive) and recording media such as an IC (Integrated Circuit) card, an SD (Secure Digital) card, or a DVD (Digital Versatile Disc).

Also, in each embodiment, the control lines and information lines shown are those considered necessary for description, and not all control lines and information lines in the actual product are necessarily shown. In practice, it can be assumed that almost all components are interconnected.

### Reference Signs List

1,1a to 1c filtration device
100 first member (first container)
101 first liquid holding portion
121 space (third liquid holding portion)
122 housing
150 fourth member (first container)
113 measurement portion
200 second member (second container)
201 second liquid holding portion
300 third member (second container)
301 third liquid holding portion
411 first hole
412, 412a first filter
421 second hole
422 second filter
431, 431a, 431b filter body
432, 432a, 432b frame
501 first gas discharge port
502 second gas discharge port
511 first gas discharge valve
512 second gas discharge valve
521 gas discharge pump
531 pipe filter
551 liquid discharge pipe
552 discharged liquid collector
553 suction connector
600 control device
700 fine particle suspension (liquid)
701 fine particles
711 discharged liquid
721 additive mixture (including a liquid and an additive)
731 reagent (liquid)
801 liquid delivery nozzle
Z filtration system
S2 start concentration (first process)
S3 stop suction of second liquid holding portion (second process)
S4 concentrate (second process)
S5 stop suction (third process)
S8 suck second liquid holding portion (fourth process)
S11 start suction of second liquid holding portion (fifth process)

## Claims

1. A filtration device comprising:
a first liquid holding portion configured to hold a liquid to be filtered;
a first hole disposed at a bottom surface of the first liquid holding portion;
a second hole disposed at a surface of the first liquid holding portion, the surface being separate from the bottom surface;
a second liquid holding portion in communication with the first liquid holding portion through the first hole;
a third liquid holding portion in communication with the first liquid holding portion through the second hole;
a first filter disposed at the first hole; and
a second filter disposed at the second hole.

2. The filtration device according to claim 1,
wherein the second hole has an area larger than an area of the first hole.

3. The filtration device according to claim 1,
wherein a bottom surface of the first liquid holding portion and a lower end of the second hole have a predetermined distance therebetween.

4. The filtration device according to claim 1,
wherein the first liquid holding portion is disposed in a first container,
the second liquid holding portion is disposed in a second container separate from the first container,
the first container is detachable from the second container, and
the first container is configured such that detachment of the first container from the second container enables removal of the first filter disposed at the first hole.

5. The filtration device according to claim 1,
wherein the first filter comprises a filter body and a frame disposed around an outer periphery of the filter body, and
the frame has a sufficient hardness to be gripped.

6. The filtration device according to claim 1,
wherein the filtration device has first holes, and
the first filter is disposed at each of the first holes.

7. The filtration device according to claim 6,
wherein a common first liquid holding portion, a common second hole, and a common second filter are provided for the first holes.

8. The filtration device according to claim 6,
wherein respective first liquid holding portions are provided for each of the first holes.

9. The filtration device according to claim 8,
wherein the second hole is disposed in a first container that also houses the first liquid holding portion, and
a cavity functioning as the third liquid holding portion is disposed between a periphery of the second hole and a housing of the first container.

10. A filtration system comprising:
a first liquid holding portion configured to hold a liquid to be filtered;
a first hole disposed at a bottom surface of the first liquid holding portion;
a second hole disposed at a surface of the first liquid holding portion, the surface being separate from the bottom surface;
a second liquid holding portion in communication with the first liquid holding portion through the first hole;
a third liquid holding portion in communication with the first liquid holding portion through the second hole;
a first filter disposed at the first hole;
a second filter disposed at the second hole; and
wherein the second liquid holding portion and the third liquid holding portion are connected to a gas discharge pump.

11. A filtration method comprising:
providing a filtration system comprising:
a first liquid holding portion configured to hold a liquid to be filtered;
a first hole disposed at a bottom surface of the first liquid holding portion;
a second hole disposed at a surface of the first liquid holding portion, the surface being separate from the bottom surface;
a second liquid holding portion in communication with the first liquid holding portion through the first hole;
a third liquid holding portion in communication with the first liquid holding portion through the second hole;
a first filter disposed at the first hole; and
a second filter disposed at the second hole;
wherein the second liquid holding portion and the third liquid holding portion are connected to a gas discharge pump; and
the filtration method further comprising performing by the filtration system a first step of discharging gas from the second liquid holding portion and the third liquid holding portion by the gas discharge pump in response to introduction of a fine particle suspension containing a fine particle into the first liquid holding portion.

12. The filtration method according to claim 11,
wherein a bottom surface of the first liquid holding portion and a lower end of the second hole have a predetermined distance therebetween,
the filtration method further comprising performing by the filtration system:
a second step of stopping gas discharge from the second liquid holding portion and continuing gas discharge from the third liquid holding portion in response to a liquid level of the fine particle suspension that reaches a vicinity of the lower end of the second hole after the first step;
a third step of stopping gas discharge from the third liquid holding portion in response to the liquid level of the fine particle suspension that reaches the lower end of the second hole; and
a fourth step of discharging gas from the second liquid holding portion.

13. The filtration method according to claim 11,
wherein the filtration system comprises a liquid delivery nozzle configured to inject the liquid into the first liquid holding portion, and
the fine particle suspension is injected from the liquid delivery nozzle to the first filter at a height that prevents formation of bubbles on a surface of the first filter when the liquid is injected from the liquid delivery nozzle into the first liquid holding portion.

14. The filtration method according to claim 12,
wherein, after the third step, the fourth step is performed in response to an additive being added to the fine particle suspension.

15. The filtration method according to claim 12,
wherein the filtration system comprises a liquid delivery nozzle configured to inject the liquid into the first liquid holding portion, and
the liquid delivery nozzle is configured to deliver a predetermined liquid to the second filter at any time from the second step to the fourth step.

16. The filtration method according to claim 12, further comprising performing a fifth step of discharging gas from the second liquid holding portion after the fourth step in response to a predetermined reagent being added to the fine particle disposed on a surface of the first filter.
